## Europäisches Patentamt

## European Patent Office

## Office européen des brevets

(11) Veröffentlichungsnummer: **0 237 896**
A2

(12) **EUROPÄISCHE PATENTANMELDUNG**

(21) Anmeldenummer: 87103292.6

(22) Anmeldetag: 07.03.87

(51) Int. Cl.⁴: **B23G 1/10** , B23G 1/04

(30) Priorität: 18.03.86 IT 1979886

(43) Veröffentlichungstag der Anmeldung:
23.09.87 Patentblatt 87/39

(84) Benannte Vertragsstaaten:
AT BE CH DE FR GB IT LI LU NL SE

(71) Anmelder: **CARLE & MONTANARI S.p.A.**
**Via Neera 39**
**I-20141 Milano(IT)**

(72) Erfinder: **Serafini, Giulio**
**Via Montemartini 6**
**I-20139 Milano(IT)**

(74) Vertreter: **de Dominicis, Riccardo et al**
**de Dominicis & Partners s.a.s. Via Brera, 6**
**I-20121 Milano(IT)**

(54) **Speisetrichter fuer Schokoladenwalzenreibmaschinen.**

(57) Ein Speisetrichter (1) fuer Schokoladenwalzenreibmaschinen mit einem im Bereich seiner Abfuehrmuendung (2) befindlichen Drehventil (3), das mit am Umfang liegenden Dosierkammern (4) versehen ist, die in einer ersten Stellung unterhalb der Abfuehrmuendun (2) mit Schokolade durch Schwerkraft gefuellt werden und, in einer zweiten Stellung, ausserhalb der genannten Abfuehrmuendung (2) ebenfalls durch Schwerkraft die Schokolade herunterfallen lassen. Diese Aufnahmekammern (4) sind vorteilhafterweise profiliert vorgesehen. Ausserdem sind dieselben zweckmaessigerweise mit einem aufblasbaren Luftkammerelement (11) versehen, dessen Aufblasen zwangslaeufig eine sichere und einwandfreie Verdraengung der Schokolade, sowie ihren Ausfall nach unten bewirkt. Der mit dem vorgeschlagenen Drehventil (3) versehene Speisetrichter ist insbesondere zur Anwendung an Schokoladenwalzenreib-bzw. Schokoladenvorwalzenreibmaschinen, Giessbleche fuer Schokolade und dergleichen geeignet.

FIG. 1

## Speisetrichter fuer Schokoladenwalzenreibmaschinen

Vorliegende Erfindung bezieht sich auf einen Speisetrichter fuer Schokoladenwalzenreibmaschinen.

Bekannterweise wird bei Schokoladenwalzenreib-sowie Schokoladenvorwalzenreibmaschinen die Schokolade durch einen Speisetrichter ins Lieferwalzenpaar der genannten Maschinen gespeist. Dieser Speisetrichter besteht im wesentlichen aus einem rechtkantfoermigen Behaelter, in welchen die Schokolade von oben durch Bandfoerderer oder dergleichen zugefuehrt wird, wobei der Speisetrichter in seinem unteren Abschnitt einen Ansatz mit gleicher Breite jedoch reduziertem Querschnitt aufweist, dessen Ablassoeffnung die Abfuehrmuendung des Speisetrichters bildet. Dieser Abfuehrmuendung ist ein schwenkbarer Schild zugeordnet, der durch seine Oeffnungs-bzw. Schliessbewegung den Austrag der Schokolade bzw. dessen Unterbrechung bewirkt. Aus baulichen Gruenden weist der Zufuehransatz des Speisetrichters eine Breite auf, die kleiner als die Arbeitsbreite der durch den Speisetrichter zu speisenden Reibwalzen der Schokoladenwalzenreib-bzw. Schokoladenvorwalzenreibmaschine ist. Ueblicherweise betraegt dieser Breitenunterschied 500 mm.

Bei den ueblichen Speisetrichtern erfolgt die Schokoladenspeisung durch Schwerkraft, wobei die zugefuehrte Schokoladenmenge in Abhaengigkeit von der Oeffnungszeit des schwingenden Schildes eingestellt wird. Die Speisetrichter bekannter Bauart sind mit verschiedenen Unzulaenglichkeiten und Nachteilen behaftet, von welchen die wichtigsten nachfolgend kurz angefuehrt sind.

Aufgrund der unterschiedlichen Viskositaetswerte, die die zu behandelnde verschiedenen Schokoladensorten aufweisen, ergibt sich, dass die Schokoladespeisemenge oft unregelmaessig sind. Die Oeffnungszeiten des schwingenden Schildes koennen kaum konstant eingehalten und eingestellt werden, wobei kleine Zeitaenderungen in der Steuerung des schwingenden Schildes eine Abgabe von ungenauen Schokoladenmengen mit sich bringen. Die in bezug zu den Lieferwalzen kleinere Breite des Speisetrichters fuehrt zu Schwierigkeiten bezueglich der Gleichmaessigkeit der Dicke der im Bereich der endseitigen Abschnitte der Reibwalzen zugefuehrten Schokolade, wobei diese endseitigen Abschnitte im allgemeinen zu kleine Schokoladenmengen oder manchmal sogar keine Schokolade erhalten.

Die Zufuehrung von Schokolade zum Speisetrichter an bevorzugten Trichterstellen, d. h. in der Mitte und/oder an den Seiten fuehrt zur Bildung einer Schokoladenmasse im Speisetrichter, deren Oberseite von einem horizontalen Verlauf abweicht und z. B. ein dachfoermiges oder schraegliniges Profil usw. aufweist, wodurch ueber die Laenge des Speisetrichters unterschiedliche Hoehen bzw. Zulaufhoehen von Schokolade entstehen, und dadurch die Zufuehrung zu der stromabwaerts liegenden Maschine, d. h. Schokoladenwalzenreib-bzw. Schokoladenvorwalzenreibmaschine, ebenfalls unguenstig beeinflusst wird.

Uebermaessige Schokoladezufuehrungen ins Lieferwalzenpaar der stromabwaerts liegenden Maschine haben oefters einen Ueberlauf der Schokolade aus den Maschinenseitenflanken zur Folge, die eine Verschmutzung der Maschine verursachen kann und manchmal bis zu den Lagern der Reibwalzen in den Maschinenoelbehaelter und auf die Antriebsraeder der Reibwalzen gelangt. Daraus ergeben sich Arbeitsschwierigkeiten sowie die Notwendigkeit Wartungsarbeiten durchzufuehren.

Der vorliegenden Erfindung liegt die Aufgabe zugrunde, einen Speisetrichter der eingangs erwaehnten Art zu schaffen, der faehig ist, eine Schokoladenmenge zuzufuehren, die jeweils der tatsaechlich vorgesehenen Menge entspricht, und dies unabhaengig von der Schokoladenviskositaet sowie von der Schokoladenniveauhoehe im Speisetrichterinneren.

Im Rahmen der oben erwaehnten Aufgabe liegt auch die Schaffung eines Speisetrichters, der faehig ist, eine Schokoladenspeisemenge zu liefern, die ueber die ganze Arbeitsbreite der Lieferwalzen der stromabwaerts liegenden Maschine moeglichst gleichmaessig ist.

Die angegebene Aufgabe wird nach der Lehre der vorliegenden Erfindung dadurch geloest, dass der Abfuehrmuendung des Speisetrichters ein Drehventil mit Dosierkammern zugeordnet ist. Erfindungsgemaess werden vorteilhafterweise die Dosierkammern des Drehventils profiliert ausgefuehrt. Diese Profilierung wird an der Grundflaeche der Dosierkammern des Drehventils vorgesehen und hat im Querschnitt vorteilhafterweise die Form eines umgedrehten Daches, wodurch eine Schokoladenmenge mit groesserer Dicke in der Naehe der Lieferwalzenenden der Schokoladenwalzenreib-bzw. Schokoladenvorwalzenreibmaschine abgesetzt wird, die sich danach selbsttaetig durch Schwerkraft zu den Endseiten der genannten Lieferwalzen dickengleich ausbreitet.

Nach einem weiteren Merkmal vorliegender Erfindung sind die Grundflaechen der profilierten Dosierkammern des Drehventils jeweils durch eine Luftkammerausbildung gebildet, die zum Aufblasen dieser Luftkammer zwecks Ausstossung der aufgenommenen und dosierten Schokolade mit einer Druckquelle sowie mit einer Unterdruckquelle oder mit einem ins Freie fuehrenden Ablass, zur raschen Rueckstellung der genannten Luftkammerausbildung, verbunden werden kann.

Durch den erfindungsgemaess verbesserten Speisetrichter werden zahlreiche Vorteile erzielt. Erstens wird es moeglich, eine hohe Genauigkeit der jeweiligen erwuenschten Schokoladenspeisung zu erreichen, indem die Liefermenge jeweils im voraus dosiert wird. Solche Dosierung benoetigt keine besonderen Mittel, sie nutzt hingegen lediglich die Schwerkraft. Gleichzeitig laesst sich die in die einzelnen Dosierkammern des sternfoermigen Lieferrotors gelangende Schokoladenmenge zusaetzlich auch durch Verstellung der Drehgeschwindigkeit des genannten sternfoermigen Lieferrotors genau feststellen, wodurch die Einstellung der Dosierung aeusserst erleichtert wird, und dies unabhaengig von der Viskositaet des jeweils behandelten Schokoladenteigs.

Ein weiterer wichtiger Vorteil der Erfindung wird in der Profilierung nach Art eines umgedrehten Daches angesehen, die an der Grundflaeche der Dosierkammern des Drehventils bzw. Dosierrotors in Axialrichtung vorgesehen ist, indem der Ueberschuss an Produkt, der im Bereich der endseitigen Abschnitte des genannten Drehventils auftritt, nach seiner Uebergabe auf das Lieferwalzenpaar, eine automatische Selbstabflachung der abgegebenen Schokoladenmasse im Bereich der - schokoladenarmen Bereiche im genannten Lieferwalzenpaar, d. h. an den seitlichen Zonen derselben, bewirkt.

Ein anderer bedeutender Vorteil besteht darin, dass die Auswirkung der Schwerkraft auf die dosierte Liefermenge von Schokolade bei ihrer Ausstossung aus den Dosierkammern dadurch wirksam unterstuetzt wird, dass je Dosierkammer an ihrer Grundflaeche eine Luftkammerausbildung, d. h. eine aufblasbare Ausbildung aufweist und auf diese Weise durch Aufblasen eine rasche und vollstaendige Abfuhr der jeweils aufgenommenen Schokoladenmenge bewirkt wird. Infolge der raschen Aufblaswirkung wird das im Querschnitt konkave Profil der mit der Schokolade in Beruehrung stehenden Grundflaeche der jeweiligen Luftkammer verformt, wobei das genannte Profil von einer im wesentlichen konkav gebogenen Linie auf eine im wesentlichen flaechige bzw. leicht konvex gebogene Linie uebergeht. In der Praxis werden gute Abfuhrergebnisse auch mit einer flachen Form erreicht, indem dieselbe bei der Verdrehung des Drehventils eine schraege Stellung in der Fallzone der dosierten Schokolade aufnimmt, wodurch diese Schokoladenmenge sich einwandfrei abloest. Die Wahl eines zweckmaessigen Materials mit einem niedrigen Anhaftungskoeffizient erleichtert diese Abloesung noch mehr.

Ein Vorteil des vorgeschlagenen Speisetrichters ist noch im einfachen Aufbau des Drehventils sowie der zugehoerigen Antriebs-und Aufblas-bzw. Saugmittel zu sehen, wobei diese letzteren als drehbare Sammler ausgebildet werden koennen. Diese Sammler koennen am Drehventil auf seinem einen Ende angebracht werden, waehrend auf dem anderen Drehventilende Antriebsmittel, z. B. in Form eines steuerbaren Elektromotors bzw. eines Motorgetriebes oder eines pneumatischen bzw. hydraulischen Antriebs vorgesehen sind.

Ausserdem besteht ein sehr wichtiger Vorteil des vorgeschlagenen Speisetrichters darin, dass die Genauigkeit der Speisung bzw. Dosierung von den verschiedenen Zulaufhoehen der Schokolade im Speisetrichterinneren praktisch nicht beeinflussbar ist.

Vorteilhafterweise kann das erfindungsgemaesse Dosierdrehventil auch an Speisetrichtern von bereits bestehenden Schokoladenwalzenreibmaschinen angewandt werden, wobei die Umruestungsarbeit ganz unerheblich ist.

Weitere Merkmale, Vorteile und Einzelheiten des nach der Erfindung verbesserten Speisetrichters ergeben sich aus der nachfolgenden Beschreibung anhand der beiligenden Zeichnung, die rein schematisch ein bevorzugtes Ausfuehrungsbeispiel des erfindungsgemaessen Speisetrichters darstellt.

Es zeigen:

Fig. 1 einen Querschnitt entsprechend der Linie I'-I' in Fig. 2, und zwar durch einen erfindungsgemaess verbesserten Speisetrichter, der ueber dem Lieferwalzenpaar einer Schokoladenwalzenreibmaschine angeordnet ist;

Fig. 2 eine Vorderansicht der Anordnung in Fig. 1;

Fig. 3 einen Ausschnitt in vergroessertem Massstab aus einem Querschnitt durch das erfindungsgemaesse Dosierdrehventil in einer Ausfuehrungsform mit Ausstoss-Luftkammerausbildung.

Bezugnehmend auf die weiter oben genannten Figuren, deren einander entsprechende Teile mit gleichen Bezugszeichen versehen sind, ist mit 1 ein an sich bekannter Speisetrichter fuer Schokoladenwalzenreib-bzw. Schokoladenvorwalzenreibmaschinen, Giessbleche fuer Schokolade zur Durchfuehrung der sogenannten "Zungenanbringung" der Schokolade usw. bezeichnet, wobei der Speisetrichter einen an sich bekannten Aufbau aufweist und aus einem Schokoladenaufnahmehauptabschnitt 1a und einem darauf folgenden Schokoladenzufuhrabschnitt 1b besteht, der in bezug auf den ersten Speisetrichterabschnitt einen verengten Querschnitt besitzt.

Erfindungsgemaess ist der Abfuehrmuendung 2 des Speisetrichters 1 ein Drehventil 3 zugeordnet, das mit einer Anzahl von Dosierkammern 4 versehen ist, von welchen vier im dargestellten Ausfuehrungsbeispiel vorgesehen sind. Dieses Drehventil bildet dabei im Prinzip einen Dosierrotor und tritt anstelle eines nicht naeher dargestellten an sich bekannten schwingenden Schildes.

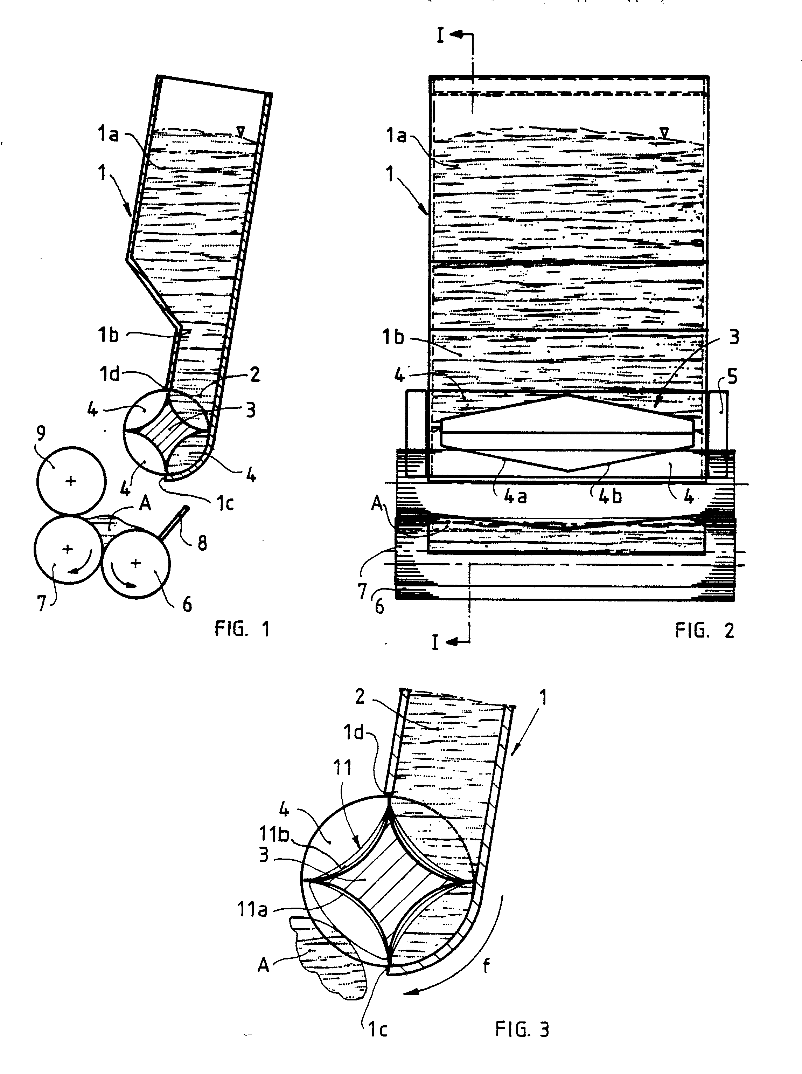

Das Drehventil 3 ist im dargestellten Beispiel durch einen elektrischen Motor bzw. ein elektrisches Motorgetriebe 5 oder ein anderes bekanntes Triebwerk angetrieben, das, wie in Fig. 2 gezeigt, ausserhalb des Speisetrichters angeordnet ist. Die einzelnen Dosierkammern 4 des Drehventils 3 gelangen jeweils wechselweise im Bereich der Abfuehrmuendung 2 des Speisetrichters. Die Dosierkammern, die infolge der Drehung des Drehventils 3 in Richtung des Pfeils f entlang der Abfuehrmuendung 2 gefuehrt werden, fuellen sich durch Schwerkraft mit Schokolade und die jeweils aufgenommene bzw. dosierte Schokoladenmenge jeder Dosierkammer 4 faellt nach dessen Austritt ueber die Abgabekante 1c des Speisetrichters durch Schwerkraft herunter und gelangt immer durch Schwerkraft zwischen den Lieferwalzen 6, 7 des Lieferwalzenpaars einer Schokoladenwalzenreib- bzw. Schokoladenvorwalzenreibmaschine oder dergleichen.

Dieses Zufuehrungsvorgangsprinzip, das an sich gemaess einem zuverlaessigen Dosierungsverfahren durchgefuehrt wird, kann durch weitere Massnahmen noch verbessert werden, welche erfindungsgemaess zunaechst darin bestehen, dass die Grundflaeche der Dosierkammern 4 profiliert vorgesehen, d. h. in der Art eines umgedrehten Daches ausgebildet werden, wie es aus Fig. 2 ersichtlich ist. Mit 4a und 4b sind die zwei - schraegen Segmente bezeichnet, die den genannten Abschnitt mit der Form eines umgedrehten Daches an der Grundflaeche jeder genannten Dosierkammer 4 bilden. Dies erlaubt, die genannten Dosierkammern 4 mit einer profilierten Schokoladenmasse A zu beladen, die zwar zwei spiegelsymmetrisch einander entgegengesetzte Abschnitte aufweist, deren Querschnitt innerhalb des Speisetrichters von innen nach aussen zunimmt, wie es aus Fig. 2 zu ersehen ist, und dies sowohl im Innenraum des Drehventils 3 als auch ueber den das Lieferwalzenpaars bildenden Lieferwalzen 6, 7 nach erfolgter Abloesung der jeweils in jeder Dosierkammer 4 aufgenommenen Schokoladenmasse A.

Durch diese Ausfuehrung wird vorteilhafterweise erreicht, dass eine Selbsteinstellung der Schokoladenmasse A in Form einer Gleichmaessigung der Schokoladenschichtdicke ueber den Lieferwalzen 6, 7 stattfindet, indem gleichzeitig sowohl die Schokoladenviskositaet als auch die Schwerkraft ausgenutzt werden. Dadurch wird der Schokolade, die sich in den aeusseren Bereichen mit groesserer Dicke befindet, die Moeglichkeit gegeben, sich selbsttaetig nach aussen, d. h. in Richtung auf die endseitigen Abschnitte der Lieferwalzen 6, 7 hin zu verbreitern, ueber welchen aus den oben schon erwaehnten baulichen Gruenden der Speisetrichter nicht ueberlappend angeordnet werden kann.

Dies ist aus Fig. 2 klar ersichtlich, bei der zwecks einer besseren Verstaendlichkeit die Abmessungsverhaeltnisse stark uebertrieben gezeichnet sind. Zur Vervollstaendigung wird noch darauf hingewiesen, dass mit 8 eine Haltewand und mit 9 die erste Reibwalze eines Satzes jeweils vorgesehenen Schokoladenreibwalzen bzw. Schokoladenvorreibwalzen bezeichnet ist.

Es wird nun auf Fig. 3 bezuggenommen, die eine weitere Verbesserung des erfindungsgemaessen Drehventils zur Zufuehrung bzw. Dosierung von Schokolade zeigt. Bei dieser Variante wird die Grundflaeche jeder Dosierkammer durch ein Luftkammerelement 11 gebildet, wobei dasselbe an seinem einen Ende abgeschlossen und an seinem anderen Ende ueber an sich bekannte nicht naeher dargestellte und mit 12 bezeichnete Drehverteiler abwechselnd einer Druckquelle und einer eventuellen Unterdruckquelle zugeordnet ist. Auf diese Weise kann die Aussenflaeche 11a des genannten Luftkammerelementes, gegen welche sich die Schokolade bei deren Einfuellung in den Dosierkammern abstuetzt, von der Grundflaeche der genannten Dosierkammer angehoben werden und dabei eine zwangslaeufige Entfernung der jeweils dosierten Schokoladenmasse A nach unten bewirken. Die Abloesung der jeweils dosierten Schokoladenmenge wird dadurch stark erleichtert und sichergestellt. Durch Wahl eines Materials fuer das Luftkammerelement 11 mit einem niedrigen Anhaftungskoeffizient wird ein vollstaendiges Ausstossen der Schokoladenmasse A ohne weiteres erreicht, welche jede Dosierkammer ausfuellt. Wie in Fig. 3 dargestellt, kann in der Praxis das Luftkammerelement 11 aus einem tuetenartigen bzw. doppelwandig ausgebildeten Element bestehen, wobei die Seite 11b auf der Grundflaeche der zugehoerigen Dosierkammer 4 fest befestigt bzw. aufgeklebt ist. Als Alternative kann das genannte Luftkammerelement lediglich aus einer elastischen Wand 11a bestehen, waehrend die Grundflaeche jeder Dosierkammer 4 vom Rotorkoerper des Ventils selbst gebildet wird.

Infolge der Rotation des Drehventils 3, die vorzugsweise mit Hin-und Herbewegungen durchgefuehrt wird, stehen genau bestimmte Zeitabstaende zum Aufblasen bzw. Entleeren der Luftkammer zur Vefuegung, wodurch auch verhaeltnismaessig rasche Arbeitsspiele bei der Zufuehrung erreicht werden koennen. Das Fuellen der Dosierkammern 4 erfolgt in zuverlaessiger Weise durch Schwerkraft, indem jede einzelne Dosierkammer 4 fortschreitend in die Abfuehrmuendung eindringt und beim Verbleiben in derselben waehrend einer Drehung von etwa 180° staendig mit dem Speisetrichterinnenraum in Verbindung steht.

Aus dem Vorstehenden geht deutlich hervor, dass die der vorliegenden Erfindung zugrunde liegende Aufgabe durch den erfindungsgemaess verbesserten Speisetrichter wirksam geloest und die eingangs erwaehnten Vorteile erreicht werden.

In der Praxis koennen die einzelnen Teile, wie auch die Anzahl der Dosierkammern und ihre Ausgestaltung ohne weiteres beliebig gewaehlt werden, ohne dadurch den Rahmen vorliegender Erfindung zu verlassen.

Eine naehere Beschreibung der elektrischen und pneumatischen Steuerschaltungen wurde deshalb weggelassen, weil diese Schaltungen dem Fachmann wohl bekannt und in unterschiedlichen Ausfuehrungen ohne weiteres herstellbar sind. Bezueglich der Drehgeschwindigkeit des Drehventils 3, der Drehungs-und Stillzeiten desselben werden diese Groessen jeweils in Abhaengigkeit des zuzuspeisenden Schokoladenteigs gewaehlt.

Obwohl die Luftkammer im aufgeblasenen Zustand in der Ausstossstellung, wie in Fig. 3 gezeigt, eine Abwurfseite mit im wesentlichen geradlinigem Verlauf aufweist, liegt ebenfalls im Rahmen der vorliegenden Erfindung die Moeglichkeit, diesen Luftkammerabschnitt im aufgeblasenen Zustand in Abhaengigkeit vom Luftdruck einen leicht konvex gebogenen Verlauf zu erteilen, dessen Profil die von den Ecken der vier Dosierkammern begrenzte Kreislinie nicht uebersteigt, um dadurch ein eventuelles Aufprallen und Zerreissen der genannten Luftkammer gegen die Eingangskante 1d des Dosiertrichters mit Sicherheit zu vermeiden.

Alle der Beschreibung, den Anspruechen und der Zeichnung entnehmbaren Merkmale sind sowohl einzeln und auch in beliebiger Kombination mineinander als erfindungswesentlich zu betrachten.

**Ansprüche**

1. Speisetrichter fuer Schokoladenwalzenreibmaschinen, Schokoladenvorwalzenreibmaschinen, Giessbleche fuer Schokolade und dergleichen, enthaltend einen schachtelfoermigen Trichterkoerper, der einen Schokoladenaufnahmehauptabschnitt und einen darauf folgenden Schokoladenzufuehrabschnitt aufweist, dadurch gekennzeichnet, dass er ein Drehventil (3) aufweist, das der Abfuehrmuendung (2) des Speisetrichters (1) zugeordnet und mit Dosierkammern (4) versehen ist, die die zu speisende Schokolade aufnehmen und dosieren.

2. Speisetrichter nach Anspruch 1, dadurch gekennzeichnet, dass die Dosierkammern (4) profiliert vorgesehen sind.

3. Speisetrichter nach Anspruch 1 und 2, dadurch gekennzeichnet, dass die Profilierung der Dosierkammern (4) jeweils an der Grundflaeche dieser Dosierkammern (4) vorgesehen ist und die Form eines umgedrehten Daches aufweist.

4. Speisetrichter nach einem oder mehreren der vorhergehenden Ansprueche, dadurch gekennzeichnet, dass die Grundabschnitte der profilierten Dosierkammern (4) des Drehventils (3) jeweils durch eine Luftkamrner (11) gebildet sind, die abwechselnd mit einer Druckquelle zum Aufblasen dieser Luftkammer und mit einem ins Freie fuehrenden Ablass bzw. mit einer Unterdruckquelle, zur raschen Rueckstellung des urspruenglichen Zustandes der genannten Luftkammer bzw. zu deren Entleerung verbindbar ist.

5. Speisetrichter nach Anspruch 4, dadurch gekennzeichnet, dass die genannte in jeder Dosierkammer (4) des Drehventils (3) vorgesehene Luftkammer (11) durch ein tuetenartiges Element gebildet ist, dessen Unterseite auf der Grundflaeche jeder profilierten Dosierkammer (4) befestigt bzw. aufgeklebt ist.

6. Speisetrichter nach Anspruch 4, dadurch gekennzeichnet, dass die genannte in jeder profilierten Dosierkammer (4) des Drehventils (3) vorgesehene Luftkammer (11) durch ein Teilstueck (11a) aus einem elastischen bzw. biegsamen Material gebildet ist, das laengs den aeusseren Laengsraendern und den Endseiten jeder einzelnen Dosierkammer (4) des Drehventils (3) luftdicht befestigt ist.

7. Speisetrichter nach einem oder mehreren der Ansprueche 4 bis 6, dadurch gekennzeichnet, dass die Verbindungen zwischen den Luftkammern (11) und der Druckquelle bzw. Unterdruckquelle oder Ablass ins Freie durch scheibenfoermige Sammler durchgefuehrt werden.

FIG. 1

FIG. 2

FIG. 3